# EUROPÄISCHE PATENTSCHRIFT

(11) **EP 1 419 636 B1**
(45) Veröffentlichungstag und Bekanntmachung des Hinweises auf die Patenterteilung: **27.12.2006**
(21) Anmeldenummer: 02762438.6
(22) Anmeldetag: 09.08.2002
(51) Int. Cl.: H04L 29/06

(54) **VERFAHREN ZUM AUTOMATISCHEN LOGIN EINER KRAFTFAHRZEUGSTEILNEHMERSTATION**
METHOD FOR THE AUTOMATIC LOGIN OF A SUBSCRIBER STATION ARRANGED ESPECIALLY IN A MOTOR VEHICLE IN AN EXTERNAL INFORMATION SYSTEM
PROCEDE D'OUVERTURE AUTOMATIQUE DE SESSION D'UNE STATION D'ABONNE SE TROUVANT EN PARTICULIER A BORD D'UN VEHICULE DANS UN SYSTEME D'INFORMATION EXTERNE

(30) Priorität: 20.08.2001 DE 10139888
(43) Veröffentlichungstag der Anmeldung: 19.05.2004
(73) Patentinhaber: Bayerische Motoren Werke Aktiengesellschaft, 80809 München (DE); SIEMENS AKTIENGESELLSCHAFT, 80333 München (DE)
(72) Erfinder: MITTEREITER, Ilse, 82008 Unterhaching (DE); DIESSEL, Thomas, 85521 Ottobrunn (DE); LANGE, Thorsten, 21079 Hamburg (DE); MEIS, Josef, 48147 Münster (DE); SAUREN, Horst-Dieter, 40625 Düsseldorf (DE); FISCHER, Michael, 35325 Mücke (DE)
(86) Internationale Anmeldenummer: PCT/EP2002/008965
(87) Internationale Veröffentlichungsnummer: WO 2003/019896

(56) Entgegenhaltungen:
- US-A- 6 108 591

## Beschreibung

### STAND DER TECHNIK

Die vorliegende Erfindung betrifft ein Verfahren zum automatischen Login einer insbesondere in einem Kraftfahrzeug befindlichen Teilnehmerstation in einem externen Informationssystem.

Obwohl prinzipiell auf beliebige Teilnehmerstationen anwendbar, werden die vorliegende Erfindung sowie die ihr zugrundeliegende Problematik in bezug auf den Login einer in einem Kraftfahrzeug befindlichen Teilnehmerstation über ein Funknetz in einem externen Server des Automobilherstellers, auch Portal genannt, erläutert.

Unter einem Login - manchmal auch Logon genannt - versteht man den Vorgang der Anmeldung eines Teilnehmers in einem Informationssystem bzw. Datenverarbeitungssystem, verbunden mit dem Vorgang des Eingebens einer Teilnehmerkennung (Identifizierung) und eines Passwords sowie der Überprüfung der Zugangsberechtigung durch das System (Authentifizierung).

Ein derartiger Vorgang ist bekannt aus dem Dokument US 6108591A. In einem Kraftfahrzeug kann es für einen Benutzer sehr unbequem sein, jedes Mal beim Starten eines mit der im Kraftfahrzeug befindlichen Teilnehmerstation befindlichen Browsers sein Password eingeben zu müssen.

Hinsichtlich der Teilnehmerkennung ist es ohnehin schon üblich, dass dem Benutzer ein Menü mit gültigen Teilnehmerkennungen an einem Bildschirm präsentiert wird, unter denen er nur noch per Knopfdruck die gewünschte Teilnehmerkennung eingeben muss, ohne dass es einer Eingabe von verschiedenen Zeichen, aus denen sich die Teilnehmerkennung zusammensetzt, bedarf.

Dies gilt insbesondere im Kraftfahrzeug, weil typische Eingabegeräte der befindlichen Teilnehmerstationen nicht als Keyboard, sondern als Joystick oder als Wippe mit relativ wenigen Direktfunktionen ausgestattet sind.

Im Zusammenhang mit einem automatischen Login sind in der Regel Sicherheitsbelange gefährdet. Dies ist jedoch im Kraftfahrzeug nicht so kritisch wie in einem öffentlich zugänglichen System, da der Benutzer zum Betreten des Kraftfahrzeugs bereits ein Sicherheitssystem, welches üblicherweise mit einem Keycode ausgestattet ist, passieren muss. Insofern ist der Zugang zum Kraftfahrzeug beschränkt, und selbstverständlich sind die Sicherheitsanforderungen hinsichtlich des Zugangs zum Kraftfahrzeug höher als die Sicherungsanforderungen hinsichtlich des Zugangs zum Browser, da das Kraftfahrzeug selbst bereits einen sehr hohen Wert darstellt.

Somit lässt prinzipiell ein automatischer Login für eine in einem Kraftfahrzeug befindliche Teilnehmerstation tolerieren.

Die der vorliegenden Erfindung zugrunde liegende Problematik besteht somit darin, ein Verfahren zum automatischen Login einer insbesondere in einem Kraftfahrzeug befindlichen Teilnehmerstation in einem externen Informationssystem anzugeben, welches einfach handhabbar ist, aber dennoch ein gewisses Mindestmaß an Sicherheit bietet.

### VORTEILE DER ERFINDUNG

Das erfindungsgemäße Verfahren mit den Merkmalen des Anspruchs 1 weist gegenüber den bekannten Lösungsansätzen den Vorteil auf, daß es einen automatischen Login mit einem zusätzlichen Sicherheitsmerkmal schafft.

Die der vorliegenden Erfindung zugrunde liegende Idee besteht darin, dass nach entsprechender Aktivierung ein automatischer Login der Teilnehmerstation in dem externen Informationssystem lediglich unter Übermittlung der Teilnehmerkennung und eines verdeckten Codes, aber ohne das Password, durchführbar ist.

In den Unteransprüchen finden sich vorteilhafte Weiterbildungen und Verbesserungen des in Anspruch 1 angegebenen Verfahrens.

Gemäß einer bevorzugten Weiterbildung wird zum Aktivieren des automatischen Login ein nicht-automatischer Login der Teilnehmerstation in dem externen Informationssystem unter Übermittlung der Teilnehmerkennung, des dazugehörigen Passwords und der Stationskennung an das externe Informationssystem durchgeführt, wobei die Anforderung im eingeloggten Zustand übermittelt wird.

Gemäß einer weiteren bevorzugten Weiterbildung befindet sich die Teilnehmerstation in einem Kraftfahrzeug und kommuniziert mit dem externen Informationssystem über ein Funknetz.

Gemäß einer weiteren bevorzugten Weiterbildung beinhaltet die Stationskennung einen Fahrzeug-spezifischen Parameter, insbesondere eine Fahrgestellnummer.

Gemäß einer weiteren bevorzugten Weiterbildung wird für jede Stationskennung nur ein einziger Code erstellt.

Gemäß einer weiteren bevorzugten Weiterbildung wird beim Aktivieren des automatischen Login in dem externen Informationssystem ein Eintrag in eine Teilnehmerliste für die betreffenden Teilnehmerkennung mit der Stationskennung und dem zugehörigen Code für den automatischen Login erstellt.

Gemäß einer weiteren bevorzugten Weiterbildung weist das externe Informationssystem eine Liste mit zulässigen Teilnehmerkennungen für eine jeweilige Stationskennung auf.

Gemäß einer weiteren bevorzugten Weiterbildung übermittelt das externe Informationssystem bei einer Login-Anforderung der Teilnehmerstation die Liste mit zulässigen Teilnehmerkennungen, wobei die Liste an der Teilnehmerstation visuell dargestellt wird.

Gemäß einer weiteren bevorzugten Weiterbildung ist eine Löschanforderung für die Teilnehmerkennung vorgesehen, welche den automatischen Login für die jeweils benutzte Teilnehmerstation deaktiviert.

Gemäß einer weiteren bevorzugten Weiterbildung ist eine Löschanforderung für die Teilnehmerkennung vorgesehen, welche den automatischen Login für jede Teilnehmerstation deaktiviert.

Gemäß einer weiteren bevorzugten Weiterbildung weist der geheime Code eine Folge von einer Mehrzahl von Zeichen auf, welche in einem vorbestimmten Wertebereich definiert sind.

Gemäß einer weiteren bevorzugten Weiterbildung wird der geheime Code durch ein Zufallsverfahren in dem externen Informationssystem erzeugt.

Gemäß einer weiteren bevorzugten Weiterbildung wird beim Versuch eines automatischen Login unter Übermittlung der Teilnehmerkennung ohne das Password, der Stationskennung und verdeckter Übermittlung eines falschen Codes an das externe Informationssystem der automatische Login für jede Teilnehmerstation deaktiviert.

### ZEICHNUNGEN

Ausführungsbeispiele der Erfindung sind in den Zeichnungen dargestellt und in der nachfolgenden Beschreibung näher erläutert.

Es zeigen:
Fig. 1 eine schematische Darstellung eines Systems, in dem das erfindungsgemäße Verfahren zum automatischen Login anwendbar ist;
Fig. 2 eine detailliertere Darstellung der Teilnehmerliste UL, welche bei einer Ausführungsform des erfindungsgemäßen Verfahrens in dem externen Informationssystem P gespeichert ist;
Fig. 3 einen Ablauf von Verfahrensschritten zur Aktivierung eines automatischen Login gemäß der hier näher erläuterten Ausführungsform der vorliegenden Erfindung; und
Fig. 4 eine Darstellung der Verfahrensschritte für einen automatischen Login bei der hier beschriebenen Ausführungsform, nachdem der automatische Login bereits aktiviert ist.

### BESCHREIBUNG DER AUSFÜHRUNGSBEISPIELE

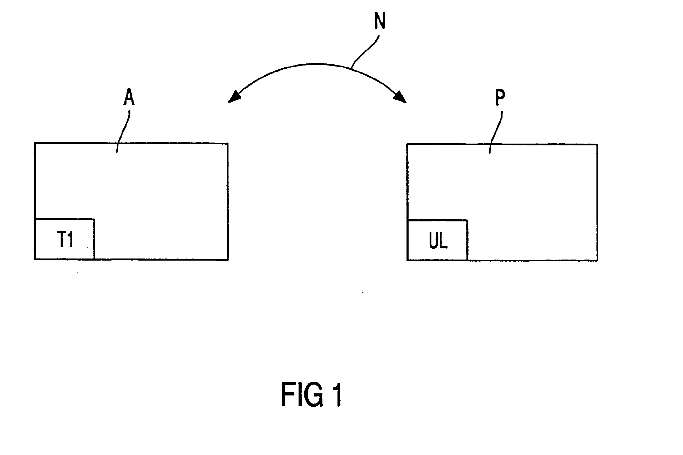

Fig. 1 zeigt eine schematische Darstellung eines Systems, in dem das erfindungsgemäße Verfahren zum automatischen Login anwendbar ist.

In Fig. 1 bezeichnet Bezugszeichen A ein Kraftfahrzeug, dessen Zugang in üblicher Weise durch ein entsprechendes Schlüsselsystem bzw. Keycode-System gesichert ist. Im Kraftfahrzeug A befindet sich eine Teilnehmerstation T1, welche vom Benutzer des Kraftfahrzeugs mittels einer entsprechenden Bedienungseinrichtung, z.B. in Form eines Joysticks oder einer Wippe, bedienbar ist. Die Teilnehmerstation T1 enthält einen entsprechenden Browser, welcher die Bedienung der Teilnehmerstation T1 und deren externe Kontakte steuert.

Bezugszeichen P bezeichnet ein externes Informationssystem, beispielsweise in Form eines Servers des Automobilherstellers, auch Portal genannt, mit dem die Teilnehmerstation T1 über den Browser Kontakt aufnehmen kann.

Die Kontaktaufnahme geschieht im vorliegenden Fall über ein Funknetzwerk N, beispielsweise das GSM-Funknetzwerk. Um einen unberechtigten Zugang zu dem externen Informationssystem zu vermeiden, enthält das externe Informationssystem P eine Teilnehmerliste UL, welche für sämtliche zugelassenen Teilnehmer entsprechende Berechtigungsdaten und Zugangsdaten aufweist. Die Berechtigungsdaten spezifizieren u.a., welche bestimmten Funktionen ein Teilnehmer ausführen kann, und die Zugangsdaten spezifizieren, welche Daten der Browser der Teilnehmerstation T1 übermitteln muss, damit überhaupt eine Verbindung aufgebaut wird.

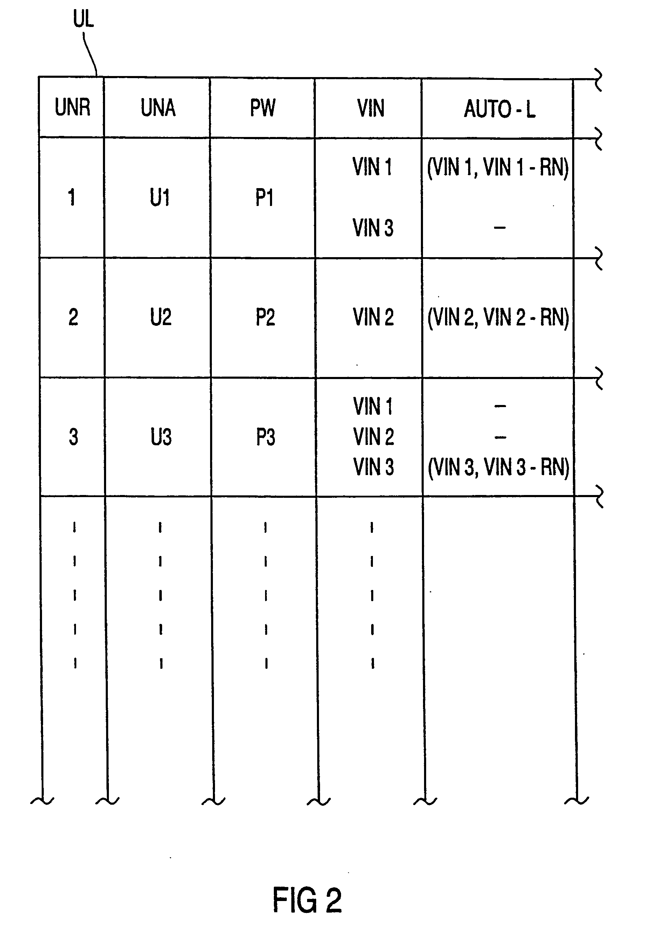

Fig. 2 zeigt eine detailliertere Darstellung der Teilnehmerliste UL, welche bei einer Ausführungsform des erfindungsgemäßen Verfahrens in dem externen Informationssystem P gespeichert ist. Aus Gründen der Übersichtlichkeit ist in vorliegendem Beispiel nur ein bestimmter Ausschnitt der Teilnehmerliste für die ersten drei Teilnehmer gezeigt.

In Fig. 2 bezeichnet UNR eine Benutzernummer, welche die entsprechenden Benutzer logisch durchnummeriert. Alternativermaßen könnte anstatt der Teilnehmernummer auch der tatsächliche Teilnehmername oder ein anderer Platzhalter verwendet werden.

In der Spalte mit der Bezeichnung UNA ist für jeden der Teilnehmer eine Teilnehmerkennung U1, U2, U3 angegeben, welche der betreffende Teilnehmer über den Browser der Teilnehmerstation T1 an das externe Informationssystem P1 übermitteln muss, um einen Zugang dazu zu erhalten. In Zusammenhang damit muss zudem bei einem üblichen nicht-automatischen Login ein entsprechendes Password PW an das externe Informationssystem P übermittelt werden, damit der Zugang freigegeben wird. Dieses Password PW ist in der dritten Spalte von links für den jeweiligen Teilnehmer angegeben, hier als P1, P2, P3.

Die vierte Spalte von links enthält eine sogenannte Stationskennung VIN. Diese Stationskennung ist im vorliegenden Fall ein Fahrzeug-spezifischer Parameter, nämlich hier die Fahrgestellnummer, welche dem externen Informationssystem P angibt, von welchem Fahrzeug aus der betreffende Teilnehmer Zugang erlangen möchte. Dies wird dadurch bewerkstelligt, dass bei jedem Login-Versuch automatisch der Parameter VIN von der Teilnehmerstation T1 über den Browser an das externe Informationssystem P übermittelt wird, und zwar üblicherweise auf verdeckte Art, d.h. ohne dass es vom Benutzer der Teilnehmerstation T1 bemerkt wird.

Wie aus der betreffenden Spalte in Fig. 2 ersichtlicht, können einem Teilnehmer mehrere Stationskennungen VIN zugeordnet werden, beispielsweise für ein Erstfahrzeug, Zweitfahrzeug, Drittfahrzeug etc.. Somit hat beim vorliegenden Beispiel der Benutzer Nr. 1 eine Zugangsberechtigung für das Fahrzeug mit der Stationskennung VIN1 und VIN3. Der Benutzer Nr. 2 hat nur eine Zugangsberechtigung für das Fahrzeug mit der Stationskennung VIN2. Der Benutzer Nr. 3 schließlich hat Zugangsberechtigungen für die Fahrzeug mit der Positionskennung VIN1, VIN2 und VIN3.

Von wesentlicher Bedeutung für das hier erläuterte Ausführungsbeispiel der vorliegenden Erfindung ist die rechte Spalte der Teilnehmerliste UL, welche die Bezeichnung AUTO-L trägt. Diese Spalte bezeichnet nämlich, ob für den betreffenden Teilnehmer in dem jeweiligen zulässigen Fahrzeug ein automatischer Login eingerichtet ist, und des Weiteren einen geheimen Code, welcher im Fall eines automatischen Login verdeckt vom betreffenden Fahrzeug an das externe Informationssystem P zu übermitteln ist, damit der automatische Login tatsächlich durchgeführt wird.

Die besondere Bedeutung dieses besonderen Codes, hier als VIN1-RN, VIN2-RN bzw. VIN3-RN bezeichnet, liegt darin, dass selbst im Fall eines Fälschens der Stationskennung VIN ein unbefugter Zugang zu dem externen Informationssystem P unmöglich gemacht wird, da der geheime, verdeckt zu übertragende Code nicht bekannt bzw. nicht ausspähbar ist. Zu diesem Zweck kann der geheime Code rein softwaremäßig und zufallsmäßig erzeugt werden und an Speicherbereichen gespeichert werden, welche extern nicht zugänglich sind.

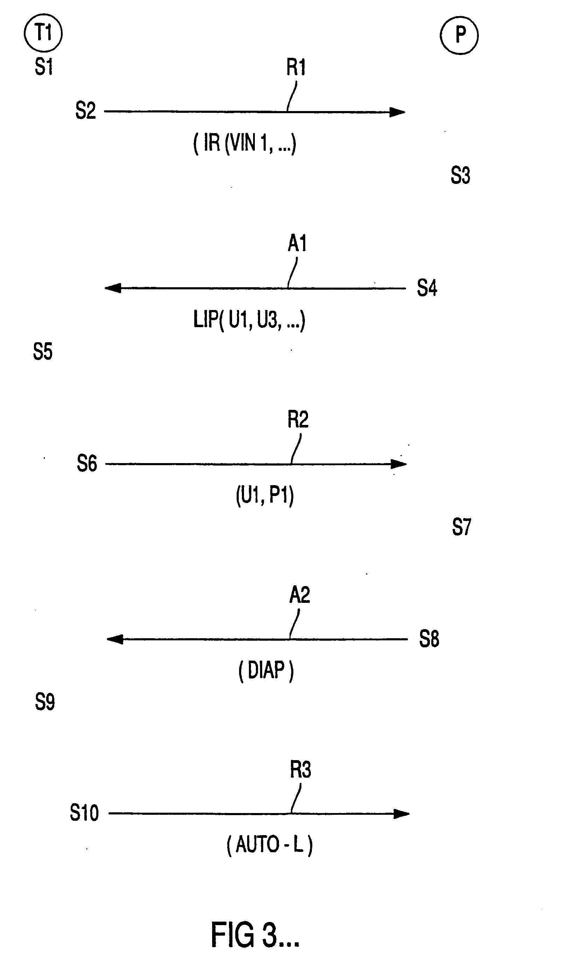

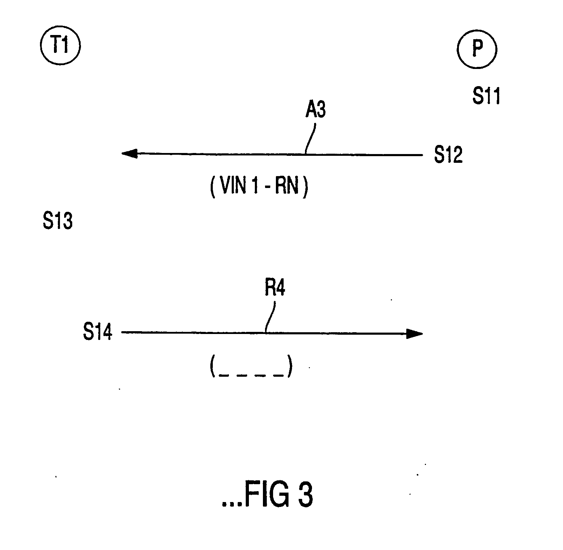

Fig. 3 zeigt einen Ablauf von Verfahrensschritten zur Aktivierung eines automatischen Login gemäß der hier näher erläuterten Ausführungsform der vorliegenden Erfindung.

In Fig. 3 bezeichnen S1 bis S14 jeweilige Verfahrensschritte, welche an der Teilnehmerstation T1 bzw. an dem externen Informationssystem P vorgenommen werden. Jeweilige Verbindungspfeile zwischen der Teilnehmerstation T1 und dem externen Informationssystem P bezeichnen entsprechende Botschaften, welche zwischen den beiden Geräten über das Funknetz N ausgetauscht werden.

In einem ersten Schritt S1 betritt der Teilnehmer bzw. Benutzer das Kraftfahrzeug A und schaltet die Teilnehmerstation T1 ein, d.h. er aktiviert den darauf installierten Browser beispielsweise durch Betätigung des Zündschlosses oder eines speziellen Ein/Aus-Schalters. Darauf folgend sendet die Teilnehmerstation T1 in einem zweiten Schritt S2 einen ersten Request R1 über das Funknetz N (hier das GSM-Netz, welches simultan aktiviert wird) an das externe Informationssystem P. Der Request R1 enthält einen Zugriffsdatensatz AR, in dem u.a. die Stationskennung VIN1 der Teilnehmerstation T1 in dem Kraftfahrzeug A enthalten ist, so dass das externe Informationssystem P ohne weiteres erkennen kann, woher der Request R1 kommt.

In einem dritten Schritt S3 prüft das externe Informationssystem P, ob für die Stationskennung VIN1 gültige Teilnehmer vorgesehen sind. Im vorliegenden Fall sind für die Stationskennung VIN1 die Teilnehmer mit der Teilnehmerkennung U1 und U3 vorgesehen, wie sich unmittelbar aus der Teilnehmerliste gemäß Fig. 2 ergibt.

In einem nächsten Schritt S4 sendet das externe Informationssystem P eine Antwort A1 an die Teilnehmerstation T1. Diese Antwort besteht aus der so genannten Login-Page bzw. Login-Seite LIP, wobei im vorliegenden Beispiel die zulässigen Teilnehmerkennungen U1, U3 an die Teilnehmerstation T1 direkt übertragen werden und dort auf einer nicht gezeigten Anzeigeeinheit für den Benutzer zur Auswahl angeboten werden.

In einem weiteren Schritt S5 gibt der Benutzer über die Eingabeeinheit der Teilnehmerstation T1 die gewünschte Teilnehmerkennung, hier U1, zusammen mit dem entsprechenden Password P1 ein, woraufhin in einem Schritt S6 die Teilnehmerstation T1 diesen Datensatz gegebenenfalls zusammen mit weiteren Daten in einem Request R2 an das externe Informationssystem sendet.

Im darauf folgenden Schritt S7 wird im externen Informationssystem P geprüft, ob das Password P1 für die Teilnehmerkennung U1 richtig ist. Trifft dies nicht zu, so wird der Vorgang beispielsweise abgebrochen oder springt zurück zu Schritt S4. Da im vorliegenden Fall das Password P1 zur Teilnehmerkennung U1 gehört, sendet im darauf folgenden Schritt S8 das externe Informationssystem P eine Dialogseite DI-AP in einer zweiten Antwort A2 an die Teilnehmerstation T1.

Die Dialogseite DIAP enthält im Allgemeinen eine größere Anzahl von Eingabeoptionen bzw. -möglichkeiten, unter denen der Benutzer eine ihm geeignet erscheinende Option heraussuchen kann. Im vorliegenden Fall sei angenommen, dass eine der Optionen die Aktivierung eines automatischen Login darstellt.

Im Schritt S9 wählt der Benutzer diese Option der Aktivierung des automatischen Login aus, und im Schritt S10 wird ein entsprechender dritter Request R3 mit dem betreffenden Parameter AUTO-L an das externe Informationssystem P gesendet.

Im darauf folgenden Schritt S11 erzeugt das externe Informationssystem in der Spalte AUTO-L den in Fig. 2 für den Teilnehmer Nr. 1 in Zusammenhang mit der Stationskennung VIN1 dargestellten Eintrag (VIN1, VIN1-RN). Wie bereits oben erläutert, besagt dieser Eintrag, dass der automatische Login für diesen Benutzer und diese Stationskennung aktiviert ist und gleichzeitig damit ein zufallsmäßiger Code VIN1-RN erzeugt wird, welcher, wie weiter unten erläutert, zusammen mit einer Anforderung für einen automatischen Login von der betreffenden Teilnehmerstation T1 übermittelt werden muss, damit ein automatischer Login tatsächlich durchgeführt werden kann.

Der Code VIN1-RN ist beispielsweise ein mehrere Zeichen, beispielsweise 10 bis 20 Zeichen, langer String, welcher zur Erhöhung der Sicherheit auf einen bestimmten Wertebereich beschränkt sein kann. Beispielsweise können bestimmte Stringwerte von vornherein ausgeschlossen werden, oder es können die Stringwerte in einem bestimmten Größenbereich eingegrenzt werden.

Im darauf folgenden Schritt S12 sendet das externe Informationssystem P den erzeugten Code VIN1-RN verdeckt in der Antwort A3 an die Teilnehmerstation T1. Mit anderen Worten, der Benutzer der Teilnehmerstation T1 bemerkt weder die Übermittlung des geheimen Codes noch den Wert des geheimen Codes. Nach Erhalt des geheimen Codes VIN1-RN in der Teilnehmerstation T1 wird dieser im Schritt S13 in einem nicht-zugänglichen Speicherbereich gespeichert und steht dort für zukünftige Requests zur Verfügung.

In diesem Zusammenhang ist es möglich, diesen Code jeglichem zukünftigen Request beizufügen oder nur speziellen Requests, welche beispielsweise einen automatischen Login oder eine Änderung des Login-Status bezwecken.

Nach der somit erfolgreich durchgeführten Aktivierung des automatischen Login kann der Benutzer der Teilnehmerstation T1 in einem Request R4 eine beliebige andere Option der Dialogseite DIAP wählen und an das externe Informationssystem P zur Beantwortung bzw. Abarbeitung senden.

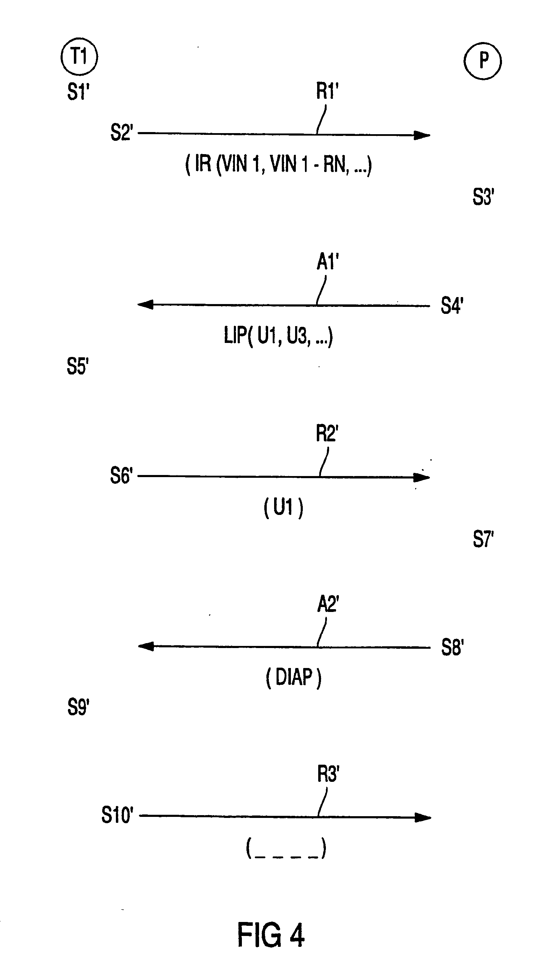

Fig. 4 zeigt eine Darstellung der Verfahrensschritte für einen automatischen Login bei der hier beschriebenen Ausführungsform, nachdem der automatische Login bereits aktiviert ist.

Im Schritt S1' wird analog wie im Schritt S1 nach Fig. 3 die Teilnehmerstation T1 vom Benutzer eingeschaltet und der Browser gestartet. Im Schritt S2' wird ein Request R1' mit dem Zugangsdatensatz von der Teilnehmerstation T1 automatisch an das externe Informationssystem P gesendet, wobei der Zugangsdatensatz im vorliegenden Fall neben der Stationskennung VIN1 den geheimen verdeckten Code VIN1-RN aufweist. Dazu sei bemerkt, dass im Fall eines nicht vorhandenen geheimen Codes VIN1-RN, wie z.B. im Fall eines ersten Logins, das entsprechende Feld des Zugangsdatensatzes leer sein kann oder einen bestimmten Wert enthalten kann, der auf das Fehlen dieses geheimen Codes hinweist.

In einem folgenden Schritt S3' überprüft das externe Informationssystem P den empfangenen Datensatz, insbesondere die Parameter VIN1, VIN1-RN unter Zuhilfenahme der Teilnehmerliste UL gemäß Fig. 2, und findet u.a. heraus, dass ein entsprechender Eintrag im entsprechenden Feld der Teilnehmerliste UL vorhanden ist, woraufhin die Entscheidung getroffen wird, dass der automatische Login zulässig ist.

Daher sendet das externe Informationssystem P im darauf folgenden Schritt S4' eine entsprechende Login-Seite bzw. Login-Page LIP in einer ersten Antwort A1' an die Teilnehmerstation T1, worin u.a. die zulässigen Teilnehmerkennungen U1, U3 aufgelistet sind, welche auf der Anzeigeeinheit der Teilnehmerstation T1 angezeigt werden.

Dabei kann der Teilnehmerkennung U1 aufgrund der erfolgten Aktivierung des automatischen Login ein Zusatz hinzugefügt werden, welcher verhindert, dass der Benutzer der Teilnehmerstation T1 auf der Login-Page LIP nach Eingabe des Passwortes gefragt wird, nachdem er sich für die Teilnehmerkennung U1 entschieden hat. Entsprechend kann auch der Teilnehmerkennung U3 ein Zusatz hinzugefügt sein, welcher besagt, dass bei einer Entscheidung für diese Teilnehmerkennung auf jeden Fall nach dem Password auf der anzuzeigenden Login-Page zu fragen ist.

Im vorliegenden Fall entscheidet sich der Benutzer im Schritt S5' für die Benutzerkennung U1, nämlich für diejenige Benutzerkennung, für die der automatische Login installiert ist. Demzufolge wird er vom Browser nicht nach dem Password P1 gefragt, sondern die Teilnehmerstation T1 überträgt unmittelbar nach der Entscheidung für die Teilnehmerkennung U1 diese in einem zweiten Request R2' an das externe Informationssystem P. Im Schritt S7' entscheidet das externe Informationssystem P, dass der automatische Login zulässig und erfolgreich ist, und sendet im Schritt S8' eine entsprechende zweite Antwort A2' mit der bereits eingeführten Dialog-Page bzw. Dialogseite DIAP an die Teilnehmerstation T1.

Wie bereits im Zusammenhang mit Fig. 3 beschrieben, entscheidet sich der Benutzer im Schritt S9' für eine bestimmte Option der Dialogseite DIAP und sendet durch seinen Browser im Schritt S10' einen entsprechenden Parameter in einem Request R3' zur Abarbeitung bzw. Beantwortung an das externe Informationssystem P.

Im Vorhergehenden wurde die Aktivierung und die Verwendung des automatischen Login mit Bezug auf Fig. 3 bzw. 4 detailliert beschrieben.

Selbstverständlich muss die Dialogseite DIAP ebenfalls eine Option zur Deaktivierung des automatischen Login beinhalten. In diesem Zusammenhang ist es zweckmäßig, zwei verschiedene Unteroptionen für die Deaktivierung des automatischen Login einzuführen, nämlich eine erste Unteroption, wobei der automatische Login nur für das betreffende Kraftfahrzeug deaktiviert wird, also beim obigen Beispiel für das Kraftfahrzeug A mit der Stationskennung VIN1, sowie eine zweite Unteroption, wo der automatische Login für sämtliche für den betreffenden Benutzer registrierten und zugelassenen Fahrzeuge entfernt wird.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Im Unterschied zu dem oben gezeigten Beispiel ist es möglich, dass einer Teilnehmerstation nicht nur ein genereller allgemeiner Code zur Absicherung des automatischen Logins zugeordnet wird, sondern für jeden Benutzer ein unterschiedlicher geheimer Code.

Des Weiteren ist der oben beschriebene Dialog selbstverständlich nur beispielhaft. Insbesondere kann z.B. der Teil des Dialogs zur Aktivierung des automatischen Logins über ein anderes Netz als das Funknetz N laufen bzw. kann außerhalb einer normalen Sitzung mit einem nicht-automatischen Login laufen. Auch muss der geheime Code nicht unbedingt ein Zufallscode sein, sondern kann beispielsweise gemäß eines vorbestimmten Algorithmus aus der Stationskennung erzeugt werden oder auf andere Weise erzeugt werden.

### Bezugszeichenliste

- A: Kraftfahrzeug
- T1: Teilnehmerstation
- N: Funknetz
- P: Portal
- UL: Teilnehmerliste
- UNR: Teilnehmernummer
- UNA, U1-U3: Teilnehmerkennung
- PW, P1-P3: Password
- VIN, VIN1-VIN3: Stationskennung
- AUTO-L: automatischer Login
- S1-S14, S1'-S10': Verfahrensschritte
- VIN1-RN, VIN2-RN, VIN3-RN: geheime Codes
- AR: Zugriffsdatensatz
- R1-R4,R1'-R3': Requests
- A1-A4, A1'-A2': Antworten
- DIAP: Dialogseite
- LIP: Loginseite

## Patentansprüche

1. Verfahren zum automatischen Login einer insbesondere in einem Kraftfahrzeug (A) befindlichen Teilnehmerstation (T1, T2, T3) in einem externen Informationssystem (P), wobei für einen nicht-automatischen Login eine Teilnehmerkennung (U1, U2, U3), ein dazugehöriges Password (P1, P2, P3) und eine Stationskennung (VIN1, VIN2, VIN3) an das externe Informationssystem (P) übermittelt werden, mit den Schritten:
Aktivieren des automatischen Login für die Teilnehmerkennung (U1, U2, U3) durch Übermitteln einer entsprechenden Anforderung von der Teilnehmerstation (T1, T2, T3) an das externe Informationssystem (P);
Erstellen eines geheimen Codes (VIN1-RN, VIN2-RN, VIN3-RN) für die Teilnehmerkennung (U1, U2, U3) in dem externen Informationssystem (P) und verdecktes Übermitteln des geheimen Codes (VIN1-RN, VIN2-RN, VIN3-RN) an die Teilnehmerstation (T1, T2, T3);
verdecktes Speichern des geheimen Codes (VIN1-RN, VIN2-RN, VIN3-RN) in der Teilnehmerstation (T1, T2, T3); und
Durchführen eines automatischen Login der Teilnehmerstation (T1, T2, T3) in dem externen Informationssystem (P) unter Übermittlung der Teilnehmerkennung (U1, U2, U3) ohne das Password (P1, P2, P3), der Stationskennung (VIN1, VIN2, VIN3) und verdeckter Übermittlung des Codes (VIN1-RN, VIN2-RN, VIN3-RN) an das externe Informationssystem (P).

2. Verfahren nach Anspruch 1, **dadurch gekennzeichnet, daß** zum Aktivieren des automatischen Login ein nicht-automatischer Login der Teilnehmerstation (T1, T2, T3) in dem externen Informationssystem (P) unter Übermittlung der Teilnehmerkennung (U1, U2, U3), des dazugehörigen Passwords (P1, P2, P3) und der Stationskennung (VIN1, VIN2, VIN3) an das externe Informationssystem (P) durchgeführt wird und die Anforderung im eingeloggten Zustand übermittelt wird.

3. Verfahren nach Anspruch 1 oder 2, **dadurch gekennzeichnet, daß** sich die Teilnehmerstation (T1, T2, T3) in einem Kraftfahrzeug (A) befindet und mit dem externen Informationssystem (P) über ein Funknetz (N) kommuniziert.

4. Verfahren nach Anspruch 1, 2 oder 3, **dadurch gekennzeichnet, daß** die Stationskennung (VIN1, VIN2, VIN3) einen Fahrzeug-spezifischen Parameter, insbesondere eine Fahrgestellnummer, beinhaltet.

5. Verfahren nach einem der vorhergehenden Ansprüche, **dadurch gekennzeichnet, daß** für jede Stationskennung (VIN1, VIN2, VIN3) nur ein einziger Code (VIN1-RN, VIN2-RN, VIN3-RN) erstellt wird.

6. Verfahren nach einem der vorhergehenden Ansprüche, **dadurch gekennzeichnet, daß** beim Aktivieren des automatischen Login in dem externen Informationssystem (P) ein Eintrag in eine Teilnehmerliste (UL) für die betreffenden Teilnehmerkennung (U1, U2, U3) mit der Stationskennung (VIN1, VIN2, VIN3) und dem zugehörigen Code (VIN1-RN, VIN2-RN, VIN3-RN) für den automatischen Login erstellt wird.

7. Verfahren nach einem der vorhergehenden Ansprüche, **dadurch gekennzeichnet, daß** das externe Informationssystem (P) eine Liste mit zulässigen Teilnehmerkennungen (U1, U2, U3) für eine jeweilige Stationskennung (VIN1, VIN2, VIN3) aufweist.

8. Verfahren nach Anspruch 7, **dadurch gekennzeichnet, daß** das externe Informationssystem (P) bei einer Login-Anforderung der Teilnehmerstation (T1, T2, T3) die Liste mit zulässigen Teilnehmerkennungen (U1, U2, U3) übermittelt und die Liste an der Teilnehmerstation (T1, T2, T3) visuell dargestellt wird.

9. Verfahren nach einem der vorhergehenden Ansprüche, **dadurch gekennzeichnet, daß** eine Löschanforderung für die Teilnehmerkennung (U1, U2, U3) vorgesehen ist, welche den automatischen Login für die jeweils benutzte Teilnehmerstation (T1, T2, T3) deaktiviert.

10. Verfahren nach einem der vorhergehenden Ansprüche, **dadurch gekennzeichnet, daß** eine Löschanforderung für die Teilnehmerkennung (U1, U2, U3) vorgesehen ist, welche den automatischen Login für jede Teilnehmerstation (T1, T2, T3) deaktiviert.

11. Verfahren nach einem der vorhergehenden Ansprüche, **dadurch gekennzeichnet, daß** der geheime Code (VIN1-RN, VIN2-RN, VIN3-RN) eine Folge von einer Mehrzahl von Zeichen aufweist, welche in einem vorbestimmten Wertebereich definiert sind.

12. Verfahren nach einem der vorhergehenden Ansprüche, **dadurch gekennzeichnet, daß** der geheime Code (VIN1-RN, VIN2-RN, VIN3-RN) durch ein Zufallsverfahren in dem externen Informationssystem erzeugt wird.

13. Verfahren nach einem der vorhergehenden Ansprüche, **dadurch gekennzeichnet, daß** beim Versuch eines automatischen Login unter Übermittlung der Teilnehmerkennung (U1, U2, U3) ohne das Password (P1, P2, P3), der Stationskennung (VIN1, VIN2, VIN3) und verdeckter Übermittlung eines falschen Codes an das externe Informationssystem (P) der automatische Login für jede Teilnehmerstation (T1; T2, T3) deaktiviert wird.

## Claims

1. A method for automatically logging in a subscriber station (T1, T2, T3) situated, more especially, in a motor vehicle (A), in an external information system (P), wherein, for a non-automatic log-in, a subscriber identification (U1, U2, U3), a pertaining password (P1, P2, P3) and a station identification (VIN1, VIN2, VIN3) are transmitted to the external information system (P), comprising the steps:
activation of the automatic log-in for the subscriber identification (U 1, U2, U3) by transmitting a corresponding request from the subscriber station (T1, T2, T3) to the external information system (P);
setting up a secret code (VIN1-RN, VIN2-RN, VIN3-RN) for the subscriber identification (U 1, U2, U3) in the external information system (P) and hidden transmission of the secret code (VIN1-RN, VIN2-RN, VIN3-RN) to the subscriber station (T1, T2, T3);
hidden storage of the secret code (VIN1-RN, VIN2-RN, VIN3-RN) in the subscriber station (T1, T2, T3); and
carrying out an automatic log-in of the subscriber station (T1, T2, T3) in the external information system (P) with transmission of the subscriber identification (U 1, U2, U3) without the password (P1, P2, P3), the station identification (VIN1, VIN2, VIN3) and hidden transmission of the code (VIN1-RN, VIN2-RN, VIN3-RN) to the external information system (P).

2. A method according to claim 1, **characterised in that**, to activate the automatic log-in, a non-automatic log-in of the subscriber station (T1, T2, T3) is carried out in the external information system (P) with transmission of the subscriber identification (U 1, U2, U3), the pertaining password (P1, P2, P3) and the station identification (VIN1, VIN2, VIN3) to the external information system (P) and the request is transmitted in the logged-in condition.

3. A method according to claim 1 or 2, **characterised in that** the subscriber station (T1, T2, T3) is situated in a motor vehicle (A) and communicates with the external information system (P) by way of a radio communications network (N).

4. A method according to claim 1, 2 or 3, **characterised in that** the station identification (VIN1, VIN2, VIN3) contains a vehicle-specific parameter, more especially a vehicle identification number.

5. A method according to any one of the preceding claims, **characterised in that** only a single code (VIN1-RN, VIN2-RN, VIN3-RN) is established for each station identification (VIN1, VIN2, VIN3).

6. A method according to any one of the preceding claims, **characterised in that**, when activating the automatic log-in in the external information system (P), an input into a subscriber list (UL) is set up for the corresponding subscriber identification (U1, U2, U3) with the station identification (VIN1, VIN2, VIN3) and the pertaining code (VIN1-RN, VIN2-RN, VIN3-RN) for the automatic log-in.

7. A method according to any one of the preceding claims, **characterised in that** the external information system (P) has a list of admissible subscriber identifications (U1, U2, U3) for a respective station identification (VIN1, VIN2, VIN3).

8. A method according to claim 7, **characterised in that**, in the event of a log-in request of the subscriber station (T1, T2, T3), the external information system (P) transmits the list of admissible subscriber identifications (U 1, U2, U3) and the list is displayed visually at the subscriber station (T1, T2, T3).

9. A method according to any one of the preceding claims **characterised in that** a cancel request for the subscriber identification (U1, U2, U3) is provided, which deactivates the automatic log-in for the respectively used subscriber station (T1, T2, T3).

10. A method according to any one of the preceding claims, **characterised in that** a cancel request for the subscriber identification (U 1, U2, U3) is provided which deactivates the automatic log-in for each subscriber station (T1, T2, T3).

11. A method according to any one of the preceding claims, **characterised in that** the secret code (VIN1-RN, VIN2-RN, VIN3-RN) has a sequence of a plurality of characters, which are defined in a predetermined value range.

12. A method according to any one of the preceding claims, **characterised in that** the secret code (VIN1-RN, VIN2-RN, VIN3-RN) is generated by a random process in the external information system.

13. A method according to any one of the preceding claims, **characterised in that** in the event of an attempt at an automatic log-in with transmission of the subscriber identification (U1, U2, U3) without the password (P1, P2, P3), the station identification (VIN1, VIN2, VIN3) and hidden transmission of an incorrect code to the external information system (P), the automatic log-in is deactivated for each subscriber station (T1, T2, T3).

## Revendications

1. Procédé d'ouverture automatique notamment d'une station d'abonné (T1, T2, T3) installée dans un véhicule automobile (A) dans un système d'information externe (P), selon lequel on transmet au système d'information externe (P) pour une ouverture non automatique, une référence d'abonné (U1, U2, U3), un mot de passe correspondant (P1, P2, P3) et une référence de station (VIN1, VIN2, VIN3) selon les étapes suivantes :
- on active l'ouverture automatique pour la référence d'abonné (U1, U2, U3) par la transmission d'une requête correspondante par la station d'abonné (T1, T2, T3) au système d'information externe (P),
- on établit un code secret (VIN1-RN, VIN2-RN, VIN3-RN) pour la référence d'abonné (U1, U2, U3) dans le système d'information externe (P) et on transmet de manière cachée le code secret (VIN1-RN, VIN2-RN, VIN3-RN) à la station d'abonné (T1, T2, T3),
- on enregistre de manière cachée le code secret (VIN1-RN, VIN2-RN, VIN3-RN) dans la station d'abonné (T1, T2, T3), et
- on effectue une ouverture automatique de la station d'abonné (T1, T2, T3) dans le système d'information externe (P) en transmettant la référence d'abonné (U1, U2, U3) sans le mot de passe (P1, P2, P3), la référence de station (VIN1, VIN2, VIN3) et la transmission cachée du code (VIN1-RN, VIN2-RN, VIN3-RN) vers le système d'information externe (P).

2. Procédé selon la revendication 1,
**caractérisé en ce que**
pour activer l'ouverture automatique, on effectue une ouverture non automatique de la station d'abonné (T1, T2, T3) dans le système d'information externe (P) en transmettant la référence d'abonné (U1, U2, U3), le mot de passe correspondant (P1, P2, P3) et la référence de station (VIN1, VIN2, VIN3) au système d'information externe (P) et on transmet la requête àl'état ouvert.

3. Procédé selon la revendication 1 ou 2,
**caractérisé en ce que**
la station d'abonné (T1, T2, T3) se trouve dans un véhicule automobile (A) et communique avec un système d'information externe (P) par un réseau radio (N).

4. Procédé selon les revendications 1, 2, 3,
**caractérisé en ce que**
la référence de station (VIN1, VIN2, VIN3) contient un paramètre spécifique au véhicule notamment le numéro de châssis.

5. Procédé selon l'une des revendications précédentes,
**caractérisé en ce qu'**
on établit un unique code (VIN1-RN, VIN2-RN, VIN3-RN) pour chaque référence de station (VIN1, VIN2, VIN3).

6. Procédé selon l'une des revendications précédentes,
**caractérisée en ce qu'**
en activant l'ouverture automatique d'un système d'information externe (P), on établit un enregistrement dans une liste d'abonnés (UL) pour les références d'abonnés (U1, U2, U3) correspondant avec les références de station (VIN1, VIN2, VIN3) et le mot de code (VIN1-RN, VIN2-RN, VIN3-RN) pour l'ouverture automatique.

7. Procédé selon l'une des revendications précédentes,
**caractérisé en ce que**
le système d'information externe (P) comporte une liste avec des références d'abonnés autorisés (U1, U2, U3) pour chaque référence de station (VIN 1, VIN2, VIN3).

8. Procédé selon la revendication 7,
**caractérisé en ce que**
le système d'information externe (P) lors d'une requête d'ouverture venant de la station d'abonné (T1, T2, T3), transmet la liste avec les références d'abonnés autorisés (U1, U2, U3) et la liste est représentée visuellement dans la station d'abonné (T1, T2, T3).

9. Procédé selon l'une des revendications précédentes,
**caractérisé en ce qu'**
une requête d'effacement de la référence d'abonné (U1, U2, U3) est prévue qui neutralise l'ouverture automatique pour la station d'abonné utilisée (T1, T2, T3).

10. Procédé selon l'une des revendications précédentes,
**caractérisé en ce qu'**
une requête d'effacement est prévue pour la référence d'abonné (U1, U2, U3) qui neutralise l'ouverture automatique de chaque station d'abonné (T1, T2, T3).

11. Procédé selon l'une des revendications précédentes,
**caractérisé en ce que**
le code secret (VIN1-RN, VIN2-RN, VIN3-RN) est une succession de plusieurs signes définis dans une plage de valeurs prédéfinie.

12. Procédé selon l'une des revendications précédentes,
**caractérisé en ce que**
le code secret (VIN1-RN, VIN2-RN, VIN3-RN) est généré par un procédé aléatoire dans le système d'information externe.

13. Procédé selon l'une des revendications précédentes,
**caractérisé en ce qu'**
en cas de tentative d'ouverture automatique entre transmettant la référence d'abonné (U1, U2, U3) sans le mot de passe (P1, P2, P3), la référence de station (VIN1, VIN2, VIN3) et la transmission cachée d'un code erroné vers le système d'information externe (P), l'ouverture automatique est neutralisée pour chaque station d'abonné (T1, T2, T3).
